# EUROPEAN PATENT APPLICATION

(11) **EP 0 645 402 A1**
(43) Date of publication of application: **29.03.1995**
(21) Application number: 93307591.3
(22) Date of filing: 24.09.1993
(51) Int. Cl.: C08F 10/08, C08F 2/38, C08F 4/12

(54) **Polybutenes**

(71) Applicant: BP CHEMICALS S.N.C., F-92400 Courbevoie (FR)
(72) Inventor: Berrier, Bernard, BP Chemicals SNC, Centre de Rec, F-13117 Lavera (FR)
(74) Representative: Hymers, Ronald Robson

(57) **Abstract**

This invention relates to a liquid phase process for the cationic polymerization of C₄ hydrocarbon feedstreams comprising isobutene in the presence of a Friedel-Crafts catalyst to a polybutene having a number average molecular weight of 600-7000. In the process, the feedstream is pre-treated with an alkyl halide, eg tertiary butyl chloride, in the substantial absence of any hydrogen halide prior to contact with the Friedel-Crafts catalyst. The polybutenes produced by this process can be used to produce functionalised derivatives which in turn can be used as additives in lubricating oils.

## Description

The present invention relates to a process for the production of poly(iso)butenes from C₄ feedstreams using an (organo)aluminium halide catalyst in conjunction with an alkyl halide cocatalyst.

It is well known to use (organo)aluminium compounds as catalysts for the cationic polymerisation of C₄ streams. In this process it is also conventional to use compounds such as HCl or alkyl halides as cocatalysts.

In particular, an alkyl halide such as tertiary butyl chloride (hereafter "TBC" for convenience) has frequently been used as cocatalyst. Examples of such use can be found in, eg GB-A-1163339 which describes a batch process for the production of polyisobutene polymers having a molecular weight between 2,000 and 4,000,000. In this process, the total weight of TBC used is from 0 to 4,000 ppm by weight based on the total charge of reactants (solvent + monomer + catalyst). The specification states (page 1, lines 25-29) that the molecular weight of the polymer diminishes as the amount of TBC added increases. It would also appear from the Examples that very low temperatures have to be used, eg of the order of -60°C or less in order to detect any polymer formation using TBC concentrations above 300 ppm.

This view is emphasised in US-A-2581154 which states (column 2, lines 14-27) that TBC, if used at concentrations outside the range of 6-100 ppm, has a poisoning effect on the polymerisation catalyst. In any event, this reference relates to the production of elastomeric polymers in the molecular weight range from lubricating oil to rubber like polymers.

Kennedy et al disclose in "Advances in Polymer Science"_{,} Vol 10, (1972) in the passage bridging pages 8 and 9 that the polymer "initiating entity could be produced in a one-step process by reacting tert-butyl chloride and an alkylaluminium compound as an alternative to the two-step process of first generating the proton and subsequently protonating the olefin. Experiments substantiated this expectation: when a dilute tert-butyl chloride solution is added to a quiescent monomer/AlR₂X or monomer/AlR₃ charge in methyl chloride, instantaneous polymerisation commences and, under appropriate conditions, remarkably high molecular weight polymer is obtained".

This article goes on to state on page 9 that "This hypothesis is in line with Petter's proposition (23) that cationic polymerisations can be initiated by carbocations generated from alkyl halides upon complexation with Friedel-Crafts halides".

More recently, it has been suggested in EP-A-370805 and in US-A-4558170 that the problems of prior art, especially with respect to producing polybutenes of a narrow molecular weight distribution and having a number average molecular weight (Mn) in the range of 700 to 3,000 can be produced by separately injecting HCl into the hydrocarbon feed stream to form an organo chloride in the feedstream thereby producing a treated feedstream mixture which contains less than 1.0 ppm free HCl and introducing this treated feedstream and an (organo)-aluminium chloride catalyst separately but simultaneously into the polymerisation reactor to form the polybutene which is subsequently recovered.

These processes have the disadvantage that they require the use of gaseous HCl which runs the risk of corrosion due to the strongly acidic nature of this reactant.

The present invention is intended to enable the production of polybutenes having a narrow molecular weight distribution in a continuous process without resorting to the use of strongly acidic reactants such as HCl which may cause corrosion of equipment and particularly of the equipment used to control addition of the acidic reagent thus leading to difficulties in the control of the addition rate and hence achievement of stable reaction conditions. Another benefit is the avoidance of the production of undesired non-initiating chlorinated species which may be formed by reaction of HCl with unsaturated species other than isobutene in the reactor feed stream.

Accordingly, the present invention is a liquid phase process for the cationic polymerisation of C₄ hydrocarbon feedstreams comprising isobutene in the presence of a Friedel-Crafts catalyst to a polymer having a number average molecular weight (Mn) from 600 to 7,000, said process comprising pretreating the hydrocarbon feedstream with an alkyl halide in the substantial absence of any hydrogen halides prior to contact of the hydrocarbon feedstream with the Friedel-Crafts catalyst.

The feedstream for this reaction can comprise pure isobutene or a mixture of C₄ hydrocarbons which predominate in isobutene. The feedstream may comprise other hydrocarbons including butene-1, butene-2, the butanes and some butadiene. Typical sources of such feedstreams include catalytically cracked or thermally cracked C₄ streams which are by-products of oil refinery processes and which have been freed from any significant quantities of butadiene and are commonly known as butadiene raffinate (hereafter "BDR"). Such a feedstream may contain, in addition to isobutene, 10-25%w/w of butane and 20-40% w/w or normal butenes without any adverse effect on the polybutene product.

Where a BDR is used as the feedstream, this is a liquid under pressure and hence no diluent is needed to maintain the reactants in the liquid phase during polymerisation. Such a feedstream suitably contains from 10 to 100% w/w of isobutene, preferably from 10 to 50% w/w of isobutene. It is preferable to use a feedstream containing at least 15% w/w, preferably at least 35% w/w of isobutene.

If a substantially pure 1-olefin feedstream is used, such a feed is gaseous under ambient conditions. Thus, it will be necessary to control either the reaction pressure or to dissolve the feedstream in a solvent medium inert under the reaction conditions in order to maintain the olefin feedstream in the liquid phase.

The alkyl halide used to pretreat the hydrocarbon feedstream before contact thereof with the Friedel-Crafts catalyst is suitably a tertiary alkyl halide preferably a tertiary butyl chloride or tertiary butyl bromide. The amount of the alkyl halide used for treatment is suitably from 0.2 - 15.0 gram moles per 1,000 kg of a typical BDR feedstream.

The Friedel-Crafts catalyst used to carry out the polymerisation is suitably an aluminium compound, which may be an aluminium halide or an organo-aluminium halide, and is preferably an alkyl aluminium dihalide or a dialkyl aluminium halide. Ethyl aluminium dichloride (hereafter "EADC") is most preferred. The catalyst is suitably used in an amount from 0.1-5.0 gram moles of the catalyst per 1,000 kg of a typical raffinate feed.

The polymerisation reaction is suitably carried out at a temperature from -40° to +45°C, preferably from -15° to +30°C.

The reaction is suitably carried out at a pressure in the range of 0.4 to 4 bar absolute.

The process of the present invention is particularly suitable for producing polyisobutenes having a number average molecular weight (Mn) from 750 to 5,000, especially from 800 to 2,500.

The polymers produced by the process of the present invention are suitable for conversion to the corresponding succinyl derivatives by reaction with maleic anhydride. Such products are known as polyisobutenyl succinic anhydrides (the so called PIBSA's) which can in turn be further functionalised by reaction with amines or alcohols to form the corresponding imino or hydroxy derivatives.

PIBSA's and their functionalised derivatives are valuable dispersancy additives for lubricating oils and fuels.

The present invention is further illustrated with reference to the following Example.

TBC was injected at 36.4 gramme moles/hr into a BDR feedstream containing 47.8% of isobutene. This treated BDR was then fed at 7.5 te/hr into a stirred tank reactor which was maintained at 12°C and into which 6.7 gramme moles/hr of EADC in hexane solution was simultaneously injected.

The polyisobutene produced was conventionally washed and stripped and was found to have a viscosity of 209cSt at 100°C, a flash point of 176°C, an Mn of 884 and a dispersion index (Mw/Mn) of 1.64 as measured by gel permeation chromatography.

## Claims

1. A liquid phase process for the cationic polymerization of C₄ hydrocarbon feedstreams comprising isobutene in the presence of a Friedel-Crafts catalyst to a polybutene having a number average molecular weight (Mn) from 600 to 7,000, said process comprising pretreating the hydrocarbon feedstream with an alkyl halide in the substantial absence of any hydrogen halides prior to contact of the hydrocarbon feedstream with the Friedel-Crafts catalyst.

2. A process according to Claim 1 wherein said feedstream comprises, in addition to isobutene, 10-25% w/w of butanes and 20-40% w/w of normal butenes.

3. A process according to Claim 1 wherein the feedstream comprises substantially pure isobutene which is maintained in the liquid phase either by controlling the reaction pressure or by dissolving the isobutene in a solvent medium inert under the reaction conditions.

4. A process according to any one of the preceding Claims wherein the alkyl halide used to pretreat the hydrocarbon feedstream is tertiary butyl chloride.

5. A process according to any one of the preceding Claims wherein the Friedel-Crafts catalyst used to carry out the polymerization is an aluminium halide or an organo-aluminium halide.

6. A process according to any one of the preceding Claims wherein the catalyst is used in an amount from 0.1-5.0 gram moles per 1,000kg of the feedstream.

7. A process according to any one of the preceding Claims wherein the reaction is carried out at a pressure in the range of 0.4-4 bar absolute and a temperature from -40 to +45°C.

8. A polybutene produced by a process according to any one of the preceding Claims wherein said polybutene has a number average molecular weight (Mn) in the range from 750 to 5,000.

9. A polybutene according to Claim 8 wherein said polybutene is converted to the corresponding polyisobutenyl succinic anhydride by reaction with maleic anhydride.

10. A polyisobutenyl succinic anhydride produced according to Claim 9 wherein said anhydride is either used as such or after conversion thereof to its functionalised amine or hydroxylated derivative as a dispersancy or detergent additive in lubricating oil compositions.
